Europäisches Patentamt

European Patent Office

Office européen des brevets

(11) Publication number: **0 233 166**
**A2**

## (12) EUROPEAN PATENT APPLICATION

(21) Application number: 87850036.2

(22) Date of filing: 03.02.87

(51) Int. Cl.⁴: **G 05 D 16/20**
**G 01 L 9/00**

(30) Priority: 05.02.86 SE 8600522

(43) Date of publication of application:
**19.08.87 Bulletin 87/34**

(84) Designated Contracting States: **CH DE LI LU NL**

(71) Applicant: **THOMAS TECHNIK GMBH**
**Postfach 1220**
**D-5243 Herdorf/Sieger (DE)**

(72) Inventor: **Bengtsson, kent**
**Blomsterhultsgatan 26**
**S-694 00 Hallsberg (SE)**

(74) Representative: **Axelsson, Rolf et al**
**Kransell & Wennborg AB Sandhamnsgatan 42**
**S-115 28 Stockholm (SE)**

(54) A combined electromagnet and fluid pressure gauge.

(57) A combined electromagnet and fluid pressure detecting
device, particularly intended for regulating the pressure of a
fluid. The electromagnet includes an armature (10) which is
arranged for axial movement in a cylindrical chamber (9)
surrounded by at least one armature magnetizing coil (4). The
chamber is provided with an inlet (16) for the fluid whose
pressure is to be determined, and comprises at least one
defining surface (17) which can be deformed by the fluid
entering the chamber and which is provided with at least one
deformation sensing means (18) arranged to produce an output
signal corresponding to the magnitude of the detected
pressure.

Fig 1

**Description**

A combined electromagnet and fluid pressure gauge

The present invention relates to an electromagnet constructed to form a fluid pressure gauge and particularly, although not exclusively, intended for controlling the pressure of a fluid, comprising a cylindrical chamber having an inlet for the fluid whose pressure is to be determined, an armature arranged for axial movement in the chamber, and at least one armature magnetizing coil placed around the chamber.

It is known to control the pressure of a fluid by means of an arrangement comprising a valve housing and a pressure control slide which can be moved axially in the housing with the aid of a proportional magnet, i.e. a magnet which exerts a constant force over a given regulating path, in order to achieve equilibrium between the magnetic force and a piston acted upon by said force. In addition to magnetic hysteresis and friction, the accuracy to which the pressure can be controlled is primarily dependent on the magnitude of the pressure and the amount of fluid to be controlled. The accuracy to which the pressure of oil can be determined with the aid of such an arrangement is unsatisfactory when the product of the pressure, measured MPa, and the liquid flow, measured in 1/m, exceeds 200.

It is also known to control the flow of a fluid with the aid of an arrangement in which a control slide is displaced by means of a proportional magnet which operates against a spring force, the position of the slide being determined with the aid of a distance measuring device and the magnetic force applied being controlled on the basis of the measured position of the slide in relation to a given reference point. The results obtained when using this technique for pressure control purposes are extremely unreliable.

It is known, for the purpose of improving the accuracy of fluid pressure controlling techniques, to gauge the pressure directly with the aid of a pressure sensor which produces a signal corresponding to the pressure sensed, this signal being utilized to adjust the pressure to a desired magnitude. This technique has no limitations with regard to pressure or fluid flow, and can be made to provide high levels of accuracy. The most serious drawback with this latter technique is that it requires the provision of a separate pressure sensor with an additional signal cable, which adds to the cost when practising this technique and also introduces serious problems of a practical nature in speciality applications.

A pressure control valve that operates in accordance with the aforesaid principle is described and illustrated in DE-A-31 36 174. The arrangement described in this prior publication includes a proportional magnet having an internal chamber, and an armature arranged for axial movement in the chamber. The magnet is housed in a housing that has been extended axially to provide an additional chamber which communicates with the inner chamber of the magnet via a channel provided herefor.

Arranged in the additional chamber is a pressure sensor which is connected to internal control electronics, which are in turn connected to an externally located comparison circuit, via a separate signal transmission line. The chamber in which the armature is accommodated is in communication with the pressure fluid to be controlled, and therefore the pressure of the fluid can be detected by the pressure sensor located in the aforementioned additional chamber, thereby providing a magnet controlling feed-back signal. This known arrangement is encumbered with a number of serious drawbacks. For example, the requisite re-structuring renders the magnet too bulky for certain application. In addition, the arrangement becomes considerably more expensive as a result of the additional components required. Furthermore, the requirement that two electric cables shall be connected to one and the same magnet renders the arrangement extremely impracticable.

Because the necessary additional chamber of this known arrangement is located axially in relation to the armature and is provided at the end thereof remote from the control valve, it is difficult, or impossible, to provide the magnet with means for enabling the position of the armature to be adjusted manually in the event of an emergency. This particular construction of the known arrangement also denies the possibility of combining the magnet with sensors, transducers, etc. for indicating the position of the armature in relation to a fixed reference point.

The prime object of the invention is to provide an electromagnet of the aforesaid kind with which, inter alia, the aforementioned drawbacks inherent in an arrangement according to DE-A-31 36 174 are at least substantially eliminated.

This object is achieved in accordance with the present invention, in that the chamber accommodating the armature incorporates at least one pressure deformable defining surface, and in that said surface is provided with at least one deformation sensing element which is operative for producing an output signal corresponding to the prevailing pressure of the fluid present in said chamber.

Thus, when practising the present invention it is no longer necessary to enlargen the electromagnet structurally, since the armature chamber is also used as a pressure responsive device and the deformable surface functions as a measuring cell, therewith avoiding a bulky construction. In addition, the arrangement according to the invention retains the possibility of combining the magnet with an emergency facility and a distance measuring device. Since, when practising the invention, only a slight modification need be made to the magnet and solely suitable means responsive to deformation forces need be provided, the cost of manufacture can be kept very low.

The pressure deformable defining surface preferably comprises parts of a chamber wall, which chamber may be of circular cross-section. In this case, the wall part has attached thereto electric tension or strain detectors or transducers, the connecting wires of which are led out of the electromagnet together with the connecting wires of the magnet coil, suitably in one and the same cable or conduit. This simplifies the installation of an electromagent constructed in accordance with the invention, since similar to corresponding electromagnets not fitted with pressure sensors, only a single electrical connecting wire is required.

According to one advantageous embodiment of the invention the pressure deformable defining surface comprises a weakened section of the wall of the cylindrical armature chamber, this weakened wall section preferably having the form of a circumferentially extending necked wall portion, in which the strain detectors may be protectively located.

In accordance with a further embodiment of an electromagnet constructed in accordance with the invention and intended for controlling the pressure of a fluid, the armature is arranged to steer a control slide which is arranged for movement in a valve housing, and the fluid whose pressure is to be determined or controlled is also intended to be delivered to said chamber in order to produce an electric pressure-signal which can be utilized for steering the control slide.

In those cases in which, for certain applications, the armature has provided on one end thereof activating means for co-action with an external element, such as a control slide in a valve housing for instance, the armature may be provided on the other end thereof with means which will enable the position of the armature, and therewith also the position of the slide, to be adjusted manually in the event of an emergency.

In other applications the armature may have provided on said other end means with which the position of the armature can be established, said means preferably having the form of an inductive distance detector.

The invention will now be described in more detail with reference to exemplifying embodiments thereof illustrated schematically in the accompanying drawings, in which

Figure 1 is a longitudinal sectional view of an electromagnet according to the invention and a pressure control valve steered by the magnet; and

Figure 2 is a longitudinal sectional view of the electromagnet illustrated in Figure 1 combined with a distance detector.

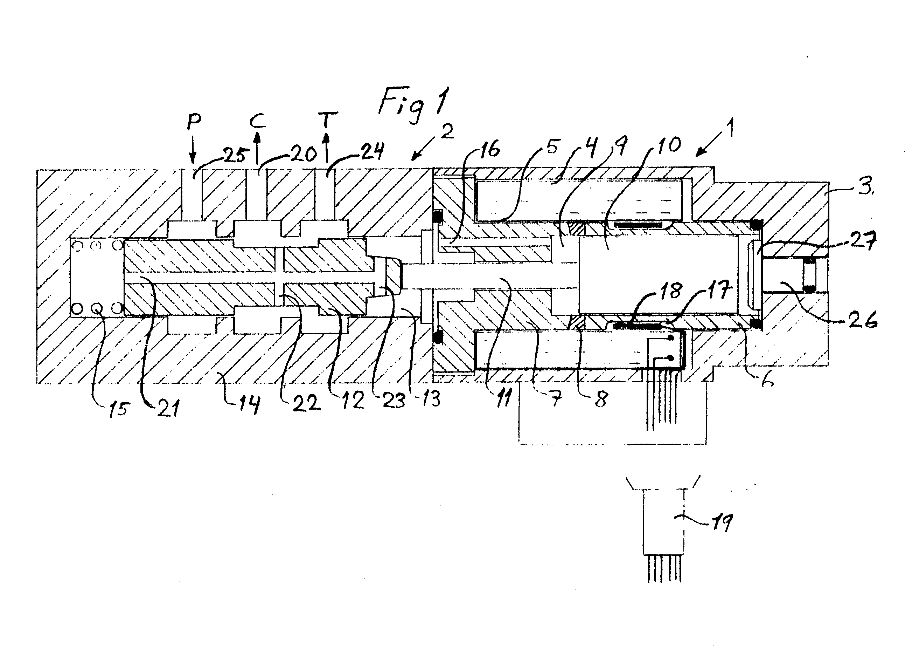

In Fig. 1 the reference numeral 1 designates a proportional magnet, while the reference numeral 2 designates a pressure control valve which is steered by the magnet 1. The magnet 1 includes an outer housing 3, which is made of a magnetizable material and which encloses a cylindrical member 5 having a magnetic coil or winding 4 placed therearound. The coil 4 encircles partially an inner sleeve-like body which incorporates a first sleeve-like part 6 and a second sleeve-like part 7, which are both made of a magnetizable material and which are mutually spearated by an annular element 8 made of a non-magnetic material. The sleeve-like body forms a chamber 9 in which a magnetizable armature 10 is arranged for axial movement in response to energization of the coil 4.

The armature 10 is provided on one end thereof with a peg 11 which is arranged to co-act with a control slide 12, said slide being axially displaceable in a slide chamber 13 in a housing 14 of the control valve 2. The slide 12 is held urged against the peg 11 by means of a spring 15.

The chamber 9 accommodating the armature 10 communicates with the slide chamber 13 through a channel 16, such that pressure prevailing in the slide chamber can be transferred through propagation into the armature chamber 9. The channel 16, however, may be connected to any desired space in which the pressure is to be measured.

For the purpose of measuring the pressure of the fluid passed to the armature chamber 9, through the channel 16, the sleeve-like first part 6 of the illustrated embodiment is provided with a weakened portion in the form of a circumferentially extending necked or waisted section 17. Thus, the wall of the sleeve-like part 6 will be deformed primarily at the necked wall-section 17 thereof when the pressure in the chamber 9 undergoes a change, the deformation being detected and converted to an electric signal form, for example with the aid of strain sensors or transducers 18. The signal conductors connected to the strain sensors, which will be protectively located in the necked wall-section 17, may be passed around the coil body 5 and out through the outer housing 3, and through the same lead-through as, and together with, the coil supply wires, and may then be connected to a common cable 19, together with said supply wires.

The strain sensors 18 are constructed to produce an electric control signal or feedback signal which corresponds to the pressure prevailing in the slide chamber 13, this feedback signal being transmitted to a comparison means, where it is compared with a set-point value. In the event of a difference between the detected pressure and the set-point pressure, there is produced a difference signal which is utilized to effect a change in the supply of current to the coil 4, thereby to displace the armature 10 axially in the chamber 9. This feedback function can be used, for example, to limit the pressure C in equipment connected to a port 20 located in the control valve, through the intermediary of the control slide 12. Thus, to this end, the control slide 12 is provided with an axial channel 21 and two transverse channels 22 and 23, so as to maintain constantly the same pressure in the chambers 13 and 9 as that prevailing at the port 20.

In the illustrated position of the control slide 12, the port 20 is in communication with a second port 24, which is connected to a tank in which a low pressure T is assumed to prevail. The pressure C prevailing in the port 20 will therefore propagate to the chamber 9, via the channels 22, 21, 23 in slide 12, the chamber 13 and the channel 16, and is detected by the pressure sensors 18, which in response thereto generate a signal which is compared with a set-point value in comparison means herefor. If the set-point value is higher than the detected pressure, the supply of current to the coil 4 is increased, so as to cause the armature to move to the left in Fig. 1, therewith displacing the slide 12 so as to cover the port 24. The port 20 is automatically moved into communication with a third port 25, which is assumed here to be connected to a pump or some other source of high pressure P. This pressure will propagate to the armature chamber 9, where it is detected by the strain sensors 18 and compared, as in the previous case, with the set-point pressure. Thus, the pressure C can be controlled as desired, irrespective of spring constants, friction, pressure and flow magnitudes and changes in the viscosity of the controlled fluid. One important advantage afforded by the aforedescribed pressure-sensing magnet is that it does not differ essentially from magnets which are not intended for pressure sensing purposes, and can be substituted for such a magnet when considered suitable. The cost of manufacturing an electromagnet according to the invention is only negligibly greater than that of producing a standard magnet and the electrical connection of the electromagnet according to the invention can be led out through one single lead-through, as in the case of a standard magnet. Since the electromagnet assembly according to the invention requires no additional chamber at the end of the armature 10 remote from the peg 11, the magnet can be provided with a manually actuable rod 26 provided with an actuating head 27 for manual displacement of the armature 10, and therewith the control slide 12, in the event of an emergency.

In certain fields of application, it may be desired to combine a pressure control facility such as that aforedescribed with a distance, or travel, control facility. This can apply, for example, in the case of manufacturing processes involving the use of mechanical presses, in which while ascertaining the path travelled by a press tool it is necessary first to know whether or not a tool has reached the position intended, and then to control the force exerted on the tool very accurately, by controlling a hydraulic pressure. This desideratum can be fulfilled by arranging a distance determining device in the space available at the end of the armature remote from the peg 11.

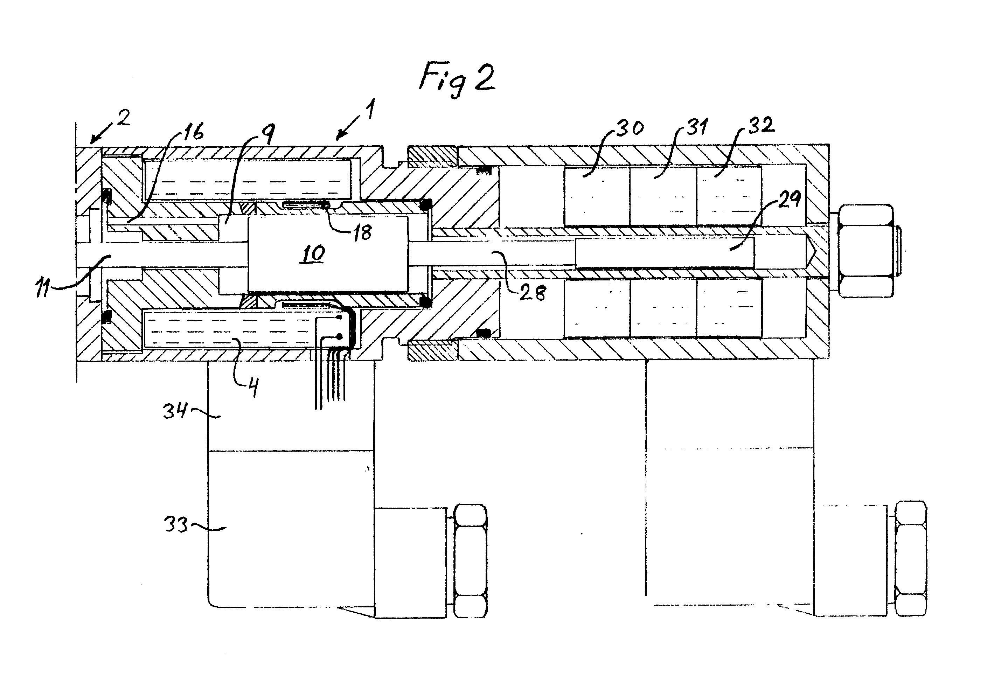

Fig. 2 is a longitudinal sectional view illustrating one such combination, comprising an electromagnet 1 connected directly to a pressure control valve 2, in accordance with the Fig. 1 embodiment. These components will not be described in the description of the Fig. 2 embodiment. However, in order to enable the position of the armature to be determined precisely, the armature 10 is provided on the end thereof remote from the peg 11 with a rod 28 having an iron core 29, which is axially movable in mutually connected coils 30, 31, 32, forming a differential transformer. An a.c. voltage is applied to the primary coil 31, the difference between the voltages induced in the secondary coils constituting a measurement of the position of the iron core 29. An electromagnet which is complemented in this way with both a pressure feedback facility and a position detecting facility affords important practical advantages in certain fields of applications. The combined arrangement or assembly can also be produced with relatively small dimensions.

With regard to the electrical connection of an electromagnet 1 according to the invention, Fig. 2 illustrates that this connection can be effected with the aid of a connecting device 33 which can be detachably connected to a socket 34 on the magnet. The connecting device 33 can contain the requisite control electronics, inter alia means for comparing the pressure feedback signal with a set-point value, and for producing the requisite correction signal. As in the case of a standard magnet, the outer connecting cable (not shown) leading to the connecting device 33 need only contain three wires or conductors, two supply wires and a signal conductor. This greatly simplifies the exchange of magnets.

The aforedescribed electromagnet constructed to form a pressure detecting device can be modified in several respects within the scope of the invention while retaining the aforedescribed advantages. For example, the described strain sensors or transducers may be replaced with other kinds of deformation sensing devices. In addition, the described necked portion may be omitted or replaced with some other form of weakening, or may comprise a weakened portion of some other material than the material of the chamber in general.

In addition to the pressure feedback facility, the electromagnet 1 may be connected for measuring external pressures which are not an object of control by the magnet. Important advantages can be obtained when using the pressure detecting facility of the magnet for controlling other magnetic valves. An example in this regard is automatic gearboxes, in which the pressure in a pressure lowering coupling can be caused to control the pressure in a pressure increasing coupling, or vice versa, in order to achieve essentially optimal transitions, for example independently of the viscosity of the hydraulic oil. In hydraulic systems in which a pump is to be controlled so that the pressure in the pump delivery pipe is always slightly higher than the pressure in a consumer incorporated in the hydraulic system, the electromagnet assembly according to the invention can be utilized to provide information concerning the pressure prevailing in the consumers connected in the system, without requiring the provision of non-return valves, as present required in conventional systems, and without needing to increase the number of electric cables required. The pump can thus be controlled with the aid of an arrangement according to the invention. Those skilled in this art will appreciate that the present invention can be applied in many other fields, additional to those mentioned above.

**Claims**

1. An electromagnet assembly (1) constructed to form a fluid pressure gauge and particularly, although not exclusively, intended for controlling the pressure of a fluid, comprising a cylindrical chamber (9) having an inlet (16) for the fluid whose pressure is to be determined, an armature (10) arranged for axial movement in the chamber, and at least one armature magnetizing coil (4) placed around the chamber, characterized in that the chamber (9) has at least one pressure deformable defining surface (17); and in that the surface is provided with at least one deformation detecting device (18) constructed to produce an output signal corresponding to the detected, prevailing pressure.

2. An electromagnet assembly according to Claim 1, characterized in that the defining surface comprises a section (17) of the cylindrical wall of said chamber; in that electric strain sensors or transducers (18) are mounted on said wall section; and in that the connecting lines of the strain sensors or transducers are passed out through the electromagnet (1) together with the connecting lines of the coil (4), suitably in a common cable (19).

3. An electromagnet assembly according to Claim 1 or 2, characterized in that the defining surface comprises a weakened section (17) of the cylindrical wall of said chamber (9).

4. An electromagnet assembly according to Claim 3, characterized in that the weakened section of the chamber wall has the form of a circumferentially extending necked section (17); and in that the at least one strain sensor (18) is arranged in said necked section.

5. An electromagnet assembly according to any of Claims 1-4, intended for controlling the pressure of a fluid, characterized in that the assembly further comprises a valve housing (14) which communicates with a source of fluid, the pressure of which is to be determined, and a control slide (12) which is arranged for movement in the valve housing (14) and which controls the pressure of the fluid; in that the armature (10) is arranged to control the movement of the control slide (12) in the valve housing (14); and in that means (22,21,23,13 and 16) are provided for transferring the fluid into the armature chamber (9), thereby to produce said output signal for controlling the position of the slide (12) in said housing.

6. An electromagnet assembly according to any of Claims 1-5 in which the armature (10) is provided on one end thereof with an actuating device (11) for co-action with an external element, such as a control slide (12) in a valve housing (14), characterized by means (24,25) provided on the opposite end of the armature (10) for manually adjusting the position of the armature in the event of an emergency.

7. An electromagnet assembly according to any of Claims 1-5, in which the armature (10) is provided on one end thereof with means (11) for co-action with an external element, such as a control slide (12) in a valve housing (14), characterized by means (28-32) at the opposite end of the armature (10) for detecting the position of the armature.

8. An electromagnet assembly according to Claim 7, characterized in that said means comprises an inductive distance measuring device (29-32).

9. An electromagnet assembly according to any of Claims 2-8, characterized in that requisite control electronics are mounted in a connecting device (33) which can be coupled to the magnet (1) and to which the connecting line of both the magnetic coil (4) and the strain sensors (18) are connected.

0233166

Fig 1

Fig 2